# EUROPEAN PATENT SPECIFICATION

(11) **EP 2 646 311 B1**
(45) Date of publication and mention of the grant of the patent: **05.06.2019**
(21) Application number: 11793516.3
(22) Date of filing: 24.11.2011
(51) Int. Cl.: B62H 3/04

(54) **BICYCLE STAND AND BICYCLE PARKING FACILITY WITH SUCH A BICYCLE STAND**
FAHRRADSTÄNDER UND FAHRRADPARKANLAGE MIT EINEM SOLCHEN FAHRRADSTÄNDER
SUPPORT À VÉLO ET PARKING À VÉLO ÉQUIPÉ DE TELS SUPPORTS

(30) Priority: 03.12.2010 NL 2005812
(43) Date of publication of application: 09.10.2013
(73) Proprietor: MPB Concepts B.V., 5653 LC Eindhoven (NL)
(72) Inventor: Paulssen, Maurice Wilhelmus Léon, 6065 BS Montfort (NL)
(74) Representative: Algemeen Octrooi- en Merkenbureau B.V.
(86) International application number: PCT/NL2011/050799
(87) International publication number: WO 2012/091553

(56) References cited:
- GB-A- 2 429 444
- JP-A- 2006 182 155
- JP-A- 2008 062 750
- NL-A- 6 601 362
- "VORKKLEMSYSTEEM VOOR FIETSEN", BOUWWERELD, REED BUSINESS INFORMATION, DOETINCHEM, NL, vol. 91, no. 17, 18 August 1995 (1995-08-18), page 35, XP000520835, ISSN: 0026-5942

## Description

The invention relates to a bicycle stand for a bicycle as according to the preamble of claim 1. The invention also relates to a bicycle parking facility comprising such a bicycle stand.

A bicycle stand of the above stated type is known from NL 6601362 A, which discloses the preamble of claim 1. The known bicycle stand comprises a block which is manufactured from reinforced concrete and an upper side of which forms a wheel support surface for load-bearing support of the front wheel of the bicycle in the parked position. The known bicycle stand also comprises support members which extend from the block and between which the front fork of the bicycle is pushed and clamped. A threshold is provided on the front side of the block. During placing in the stand the bicycle is moved up against the threshold. When it reaches the highest point of the threshold the bicycle undergoes a force which causes it to move forward so that the front wheel is placed on the block. The front fork of the bicycle is simultaneously clamped between the tube ends.

A drawback of this known bicycle stand is that it is only suitable for one particular type of bicycle. A large number of different types of bicycle are used nowadays. These may be regular bicycles, but also for instance electric bicycles, sports bicycles, touring bikes, mountain bikes, racing bikes, "granny" bikes or child's bikes. In these bicycles, and even in bicycles of the same type, use may be made of different dimensions. There is therefore a wide range of dimensions among currently available bicycles. When dimensions are too large or too small, the known bicycle stand is found to be unable to park the bicycle in the correct manner. When a bicycle is too large, the front fork will already come into contact with the support members and the wheel will not be able to move over the threshold. When a bicycle is too small, the wheel will move over the threshold but the front fork is then not clamped, or not clamped in the correct manner. The bicycle can hereby partially tip over and thereby be damaged.

GB 2429444 A discloses a bicycle stand having a mechanism for storing a bicycle in a raised position. The mechanism is movable from the raised position, towards a lowered position. In the lowered position, the bike can be placed on the supporting surface, which supporting surface extends upwardly. The rear wheel of the bicycle must be positioned in an opening in the support surface, to enable the bike to be safely raised, without the bike falling of the bicycle stand.

It is therefore an object of the present invention to provide a bicycle stand with which a greater variety of bicycles of differing dimensions can be parked in a correct manner.

The invention provides for this purpose a bicycle stand of the type stated in the preamble, wherein this bicycle stand is characterized by the characterizing part of claim 1. The bicycle stand according to the present invention comprises a wheel support surface, such as for instance a level piece of ground, a side of a concrete block or for instance a flat plate. The wheel support surface is adapted for load-bearing support of a front wheel of a bicycle in a parked position thereof. The bicycle stand also comprises two support elements, such as for instance tubular elements, placed higher relative to the wheel support surface for supporting a front fork of the bicycle in the parked position. Each of the support elements extends between a front side of the bicycle stand and a rear side of the bicycle stand. The support elements are placed at an angle relative to each other. As seen from above, a substantially converging receiving opening for the front fork of the bicycle running between the front side and the rear side is formed here between the support elements. The converging receiving opening ensures that different sizes of front fork can be received in the receiving opening. When the bicycle is inserted from the front side, both sides of the front fork will eventually come into contact with the two support elements. The front fork will lie here against the support elements. According to the invention the wheel support surface for load-bearing support of the front wheel extends sloping substantially continuously downward between the front side and the rear side of the bicycle stand over a length of 20 to 40 cm. Owing to the continuously downward sloping character of the wheel support surface and the resulting effect of the force of gravity on the front wheel, in the placed position of the bicycle the front wheel will at all times undergo a force directed toward a rear side of the bicycle stand. It makes no difference here where the exact point of contact between the front wheel and the wheel support surface is located. The obliquely placed wheel support surface and the resulting force on the front wheel will automatically urge the front fork of the bicycle at all times to a position lying against the support elements.

In order to obtain a force directed sufficiently toward the rear side of the bicycle stand, the wheel support surface has an angle of inclination to the horizontal lying between 5 degrees and 25 degrees. The angle preferably lies between 13 and 18 degrees. The angle can for instance be 15 degrees. It is found that such an angle is particularly suitable for currently available bicycles. It will however be apparent to the skilled person that other angles can also be envisaged. The angle of inclination can be an average angle of inclination, i.e the angle can vary along the length over which the wheel support surface extends. The angle can decrease continuously and/or uniformly from a relatively large angle to a relatively small angle.

The wheel support surface according to the invention extends in a continuous downward slope over a length lying between 20 cm and 40 cm. The length preferably lies between 25 and 35 cm, such as for instance 30 cm. This length ensures that the bicycle, irrespective of the wheel diameter of the front wheel, undergoes at all times a force directed toward a rear side of the bicycle stand for the purpose of urging the front fork to a position lying against the support elements. The length is determined here by the type of bicycle, wherein the factors taken into account, among others, are the position of the front fork of the bicycle and the smallest and largest front fork width of the bicycle.

In an embodiment the wheel support surface extends downward with a substantially continuous angle of inclination. Such an embodiment is easy to manufacture.

It is possible for the wheel support surface, as seen from above, to at least partially coincide with the receiving opening. The wheel support surface preferably extends beyond a part of the bicycle stand located behind the receiving opening. bicycles with a relatively small front fork width can hereby also be placed in a correct manner. The front fork will then lie against the support elements in a part of the receiving opening lying relatively to the rear. The wheel protrudes somewhat further toward the rear side of the bicycle stand. The point of contact between the front wheel and the wheel support surface is then situated, as seen from above, at a part of the bicycle stand lying behind the receiving opening. There is still an angle of inclination to the horizontal at this point of contact such that the bicycle is urged to a position of the front fork lying against the support elements.

A particularly advantageous further embodiment provides for a further improved placing. This further improvement in placing is obtained when the wheel support surface is at least partially formed by a substantially elongate profile having in cross-section two legs placed substantially at an angle relative to each other. This elongate profile can for instance be a profile with a V-shaped cross-section. At least parts of mutually facing sides of the legs then form the wheel support surface. The profile extends between the front side and the rear side of the bicycle stand. The elongate profile forms a centering unit. This avoids the bicycle being placed askew in the bicycle stand. The channel formed by the two legs ensures that the front wheel, irrespective of the dimension, is guided each time in centered manner over the profile. The front fork will thus always come into contact in correct manner with the two support elements. Because the front fork lies against the two support elements, the bicycle will always stand upright. In combination with the above described continuously downward sloping wheel support surface and the convergent receiving opening, a bicycle stand is obtained with which practically all types of bicycle can be parked in stable, centered, straight and automatically clamped manner in one stand. Damage to the wheel and/or the frame of the bicycle is hereby prevented.

In an embodiment the profile has a substantially U-shaped, V-shaped or L-shaped cross-section. The angle formed between the two legs can lie here between 70 and 110 degrees, preferably between 80 and 100 degrees. Such an angle is particularly suitable for the most common tyre sizes.

In order to enable placing of bicycles with a large number of different front fork sizes, it is recommended that the support elements extend with a length lying between 20 and 40 cm, preferably between 25 and 35 cm. The support elements can be placed here at an angle of 20 to 80 degrees, preferably 35 to 60 degrees, still more preferably between 40 and 50 degrees. A converging receiving opening with a corresponding apex angle is in this way formed. The combination of the angle and the distance makes it possible to support front forks in a large number of widths. It will otherwise be apparent to the skilled person that the length of the support elements, and the angle between the support elements, can vary. What is important is that different widths of front forks can be accommodated.

In order to be able to accommodate a large number of different front fork widths, the lateral distance between the support elements is at least 15 cm, and preferably at least 20 cm, close to a part of the receiving space located at the front side of the bicycle stand. Possibly additionally, the distance between the support elements further lies between 6 and 10 cm close to a part of the receiving space located at the rear side of the bicycle stand. The space required for passage of the front wheel of the bicycle is obtained by placing the support elements spaced-apart close to the part of the receiving space located at the rear side. This space is preferably large enough for passage of practically all width sizes of front wheels, such as for instance also tyre sizes of mountain bikes. The space is on the other hand small enough to enable the support elements to also receive relatively small front fork width sizes.

According to an aspect of the invention, a bicycle parking facility is provided comprising two or more bicycle stands according to the present invention placed adjacently of each other. The bicycle stands can be accessed here from the same side of the bicycle parking facility or be accessible from both sides. It is possible here for the bicycle stands to be alternately accessible from either side. It is also possible to envisage adjacent bicycle stands according to the present invention being placed at different heights relative to each other.

The invention will be elucidated herein below on the basis of several exemplary embodiments of the present invention. Reference is made here to the following figures, in which:
Figure 1 is a perspective view of a first embodiment of the bicycle stand;
Figure 2 is a perspective view of a second embodiment of the bicycle stand;
Figure 3 is a side view of an embodiment of the bicycle stand;
Figure 4 is a perspective view of a third embodiment of the bicycle stand;
Figure 5 is a top view of the bicycle stand according to figure 4;
Figure 6 is a side view of the bicycle stand according to figure 4.

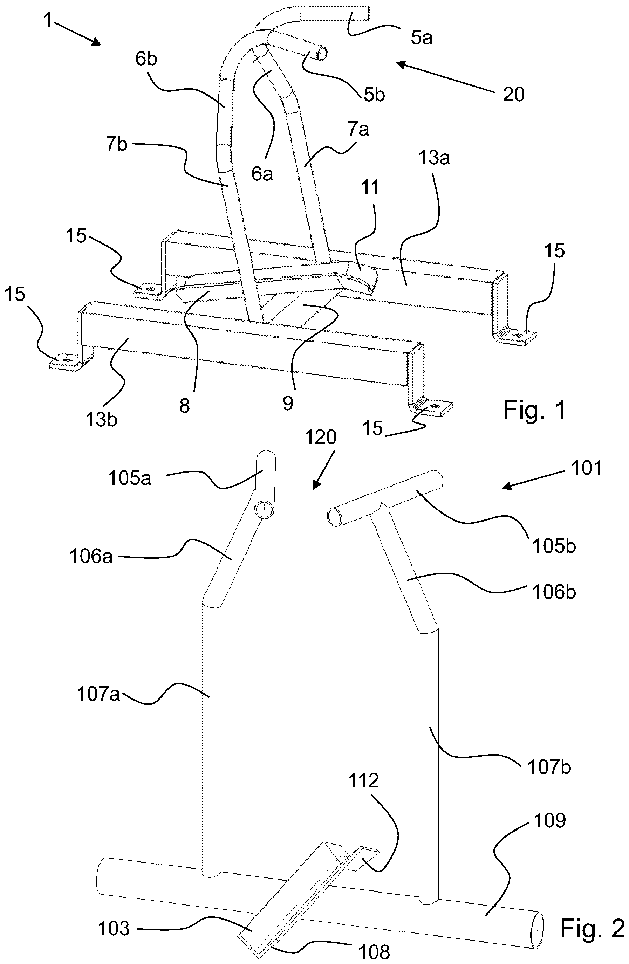

Figure 1 shows a bicycle stand 1. The bicycle stand 1 comprises a frame formed by two longitudinal beams 13a, 13b and a transverse beam 9. Provided at each of the outer ends of the longitudinal beams 13a, 13b are fastening members 15 with which the bicycle stand can be connected to the ground. A profile 8 is placed on the transverse beam 9. The profile 8 extends between a front side of the bicycle stand and a rear side of the bicycle stand. The profile 8 is placed at an angle to the horizontal such that the profile runs in a continuous downward slope to the rear side. In the shown embodiment the profile is V-shaped, but the profile can also be U-shaped or L-shaped. The inner side 3 of the profile forms a wheel support surface on which a front wheel of a bicycle, in a parked position thereof, can be placed in load-bearing manner. The form of the profile ensures that, when the bicycle is placed, it is centered at all times irrespective of the width of the front wheel of the bicycle. Two side elements 7a, 7b extend upward from the frame. The lower parts extend substantially parallel to each other here. These side elements 7a, 7b are placed at relatively wide distance from each other such that different hub widths of different types of bicycle can also be placed in the bicycle stand. Sufficient space is thus created for placing of a front wheel, including hub, in the bicycle stand 1. It will not be possible to clamp the front wheel in the bicycle stand according to the present invention. The front wheel can therefore not be damaged. Connecting members 6a, 6b are placed on an upper part of the side elements. The connecting members extend toward each other to some extent. The connecting members 6a, 6b are connected to the support elements 5a, 5b. The support elements are shaped such that a front fork of the bicycle, in a parked position, lies against the support elements 5a, 5b. The support elements extend at an angle relative to each other as seen from above the bicycle stand. On a front side of the bicycle stand the support elements 5a, 5b are placed a relatively great distance from each other. The support elements 5a, 5b extend toward each other to the rear such that the distance between the support elements 5a, 5b become smaller. A substantially converging receiving opening 20, as seen from above, is in this way formed between the support elements. The converging receiving opening 20 can receive different width dimensions of front forks such that practically any front fork will lie against the support elements 5a, 5b. The downward sloping nature of the profile, and thereby the wheel support surface 3, ensures that the front wheel is always urged to the rear side of the bicycle stand, and ensures that the front fork is urged at all times to a position lying against the support elements 5a, 5b.

The support elements 5a, 5b are preferably provided with a protective layer such that the front forks of the different bicycles are not damaged during parking of the bicycle.

The profile 8 is connected on a part thereof located at the front side of the bicycle stand to an auxiliary profile 12 with a guide surface 11. The front wheel can be placed herein in order to be placed in a parked position, and subsequently moved further to the rear side of the bicycle stand 1. When the front wheel comes in contact with the continuously downward sloping wheel support surface 3, a force will be exerted on the front wheel. This force urges the bicycle to the parked position.

Figure 2 shows an alternative embodiment of a bicycle stand 101 according to the present invention. This can be manufactured with relatively little material and is therefore relatively inexpensive. Shown is a transverse beam 109 on which is placed a profile 108 connected to an auxiliary profile 112. The profile 108 extends in a continuous downward slope between the front side and the rear side of the bicycle stand 101. The profile is placed at an angle of about 15 degrees relative to the horizontal. The profile is straight, thereby forming a wheel support surface 103 with a substantially constant downward sloping surface. Two side elements 107a, 107b extend from the transverse beam 109. The side elements 107a, 107b are connected by means of connecting members 106a, 106b to the support elements 105a, 105b. These are once again placed such that a converging receiving opening 120 for a front fork of a bicycle is formed extending between the front side and the rear side of the bicycle stand. The distance between the support elements close to the front side of the bicycle stand is about 20 cm, while close to the rear side the distance amounts to about 7 cm. Larger or smaller dimensions can be envisaged. The operation of the bicycle stand shown in figure 2 is similar to that of the embodiment shown in figure 1.

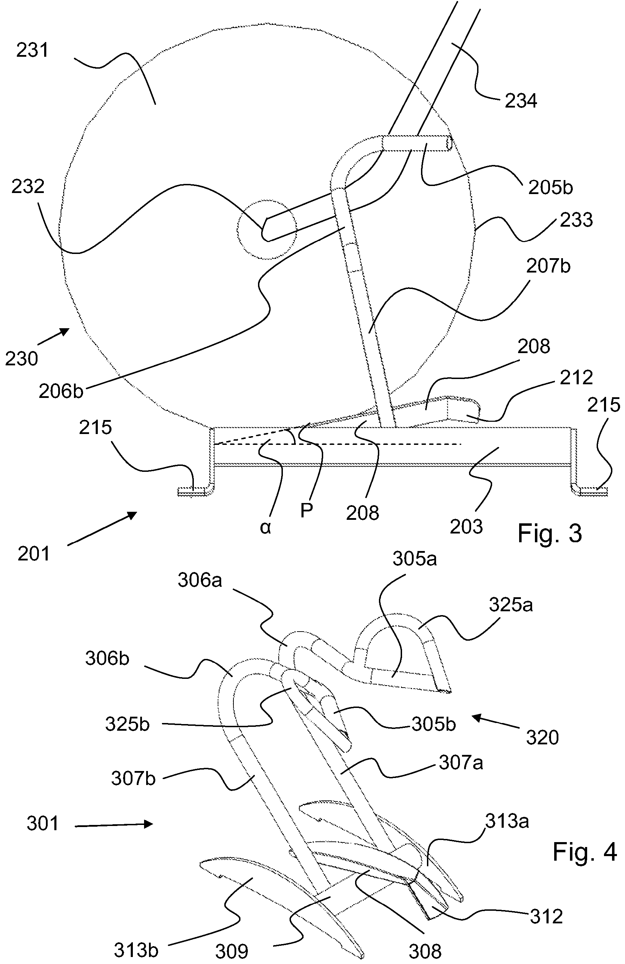

Figure 3 shows the situation in which the bicycle is in the parked position. The bicycle stand 201 comprises a base frame 213 which can be fixedly connected with connecting members 215 to a base, such as for instance the ground. The bicycle stand is also provided with the obliquely placed profile with the continuously downward sloping wheel support surface. The profile is also connected to the auxiliary profile 212 already described above for assisting the bicycle to the parked position. Extending upward from the base are the side elements 207b, with connecting members 206b, where they are connected to the support members 205b. The embodiment shown in figure 3 is highly similar to the embodiment shown in figure 1. The support members 205b (one of which is not visible in figure 3) extend in accordance with the situation shown in figure 1 such that a substantially converging receiving opening is provided for the front fork. As can be seen in figure 3, a front wheel 231 of an only partially shown bicycle 231 is placed in the bicycle stand 201. The front fork 234 of the bicycle extends upward from the hub 232 of the front wheel 230. The front fork 234 lies against the support members 205b at the position thereof. The peripheral edge 233 of the front wheel 231 lies at the position of point P on the wheel support surface of the profile 208. Owing to the downward sloping nature of the wheel support surface the wheel is urged to the rear side of the bicycle stand and the front fork is pressed against the support elements 205b.

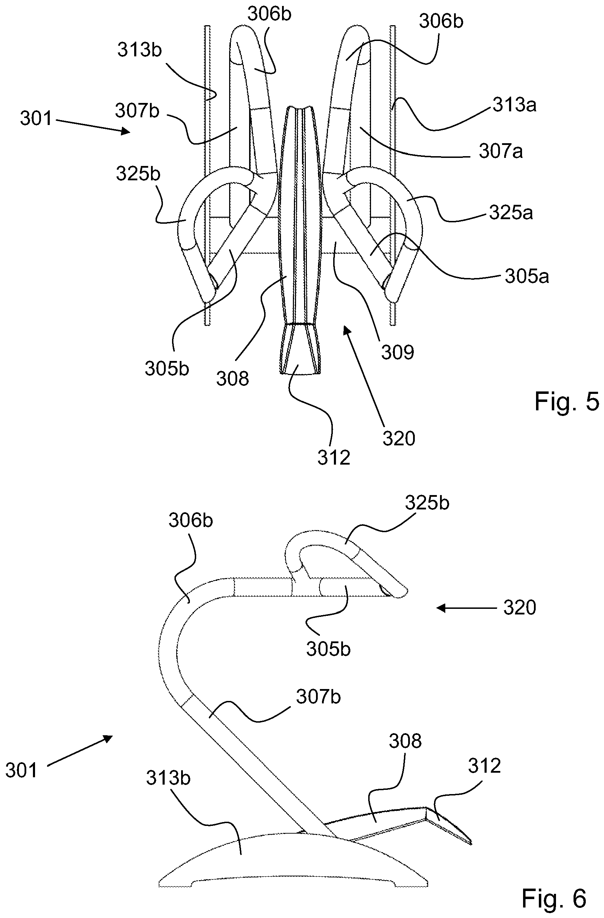

Figure 4 shows an alternative embodiment of a bicycle stand 301 according to the present invention. Figure 5 herein shows a top view of the bicycle stand according to figure 4, and figure 6 a side view. The embodiment shown in these figures is highly functional, wherein the aesthetic aspect has not however been disregarded. The bicycle stand 301 has a base comprising two longitudinal supports 313a and 313b which are mutually connected by means of a transverse support 309. A profile 308 with an auxiliary profile 312 is placed on the transverse support 309. The profile extends in continuously downward sloping manner between the front side and the rear side of the bicycle stand 301. The profile is placed at an angle of about 15 degrees relative to the horizontal. The profile is straight, whereby a wheel support surface 303 is formed with a substantially constant downward sloping surface. As clearly shown in figure 4 and figure 5, the auxiliary profile 312 has a feed opening for the wheel of the bicycle which is funnel-like. The auxiliary profile 312 thus guides the wheel in the direction of the relatively narrow part of the profile 308 of continuously downward sloping form. The profile 308 and the auxiliary profile 312 have a substantially U-shaped cross-section, wherein the legs of the U extend outward to some extent such that wide tyres can also be provided with a wheel support surface.

Referring again to figure 4, two side elements 307a, 307b extend upward from the transverse beam 309, as also clearly shown in figure 6. The side elements 307a and 307b extend here to some extent to the rear side of the bicycle stand 301. The side elements 307a, 307b are each connected by means of connecting members 306a, 306b to a support element 305a and 305b respectively. These support elements 305a and 305b are once again placed such that a converging receiving opening 320 for a front fork of a bicycle is formed extending between the front side and rear side of the bicycle stand, as can be clearly seen in figure 5. The receiving opening is relatively wide here on the front side and relatively small on the rear side. The distance between the support elements close to the front side of the bicycle stand is about 20 cm, while the distance close to the rear side amounts to about 7 cm. Smaller or larger dimensions can be envisaged. The operation of the bicycle stand shown in figure 4 is similar to that of the embodiment shown in figure 1.

The bicycle stand 301 as shown in figure 4 further also comprises two loop-like tube parts 325a and 325b provided on the support elements 305a and 305b. These loop-like tube parts 325a and 325b form together with the support elements fastening means to which a user can fasten his/her bicycle using a lock.

It will otherwise be apparent to the skilled person that the embodiments of the bicycle stand shown in figure 1, figure 2 and figures 4-6 can be added to on either side thereof with further bicycle stands so as to form a bicycle parking facility. The bicycle stands can be accessible by a bicycle from the same side or be alternately accessible in offset manner such that bicycles can be placed on either side of a thus formed bicycle parking facility. A height difference can also be present between adjacently placed bicycle stands. It is thus possible for instance to place bicycle stands adjacently of each other placed alternately in a high position and a low position.

It will otherwise be apparent to the skilled person that the profile described above with reference to the figures can also be replaced by another inclining surface. This inclining surface can for instance be a plate. It can also be an inclining upper surface of a concrete block. The inclining surface can further be an inclining surface provided in the ground surface. The ground on which the bicycle stand is placed can for instance be made with a slope. Support members can then be provided. These support members can extend upward from the ground surface. An embodiment described here falls within the scope of protection of the present invention.

Only several embodiments of the present invention are shown in the shown figures and the above description. It will be apparent to the skilled person that many variants, which may or may not be obvious, are possible within the scope of protection of the present invention as defined by the following claims.

## Claims

1. A bicycle stand (1; 101; 201; 301) for a bicycle, wherein the bicycle stand is accessible from a front side thereof by a bicycle for the purpose of placing the bicycle in a parked position, the bicycle stand comprising:
• a wheel support surface (103) for load-bearing support of a front wheel of the bicycle in the parked position of the bicycle;
• two support elements (5a, 5b; 105a, 105b; 205b; 305a, 305b) placed higher relative to the wheel support surface for supporting a front fork (234) of the bicycle in the parked position, wherein each of the support elements extends between a front side of the bicycle stand and a rear side of the bicycle stand, wherein the support elements are placed at an angle relative to each other such that, as seen from above, a substantially converging receiving opening (20; 120; 320) for the front fork of the bicycle running between the front side and the rear side is formed between the support elements;
**characterized in that** the wheel support surface for load-bearing support of the front wheel extends sloping substantially continuously downward between the front side and the rear side of the bicycle stand, wherein the wheel support surface extends in a continuous downward slope over a length of 20 cm to 40 cm, the length, over which the continuous downward slope extends, lies between 20 to 40 cm.

2. A bicycle stand (1; 101; 201; 301) according to claim 1, **characterized in that** the wheel support surface has an angle of inclination to the horizontal lying between 5 degrees and 25 degrees, preferably between 13 and 18 degrees.

3. A bicycle stand (1; 101; 201; 301) according to claim 1 or 2, **characterized in that** the wheel support surface extends in a continuous downward slope over a length of about 30 cm.

4. A bicycle stand (1; 101; 201; 301) according to one or more of the foregoing claims, **characterized in that** the wheel support surface extends downward with a substantially continuous angle of inclination.

5. A bicycle stand (1; 101; 201; 301) according to one or more of the foregoing claims, **characterized in that** the wheel support surface, as seen from above, at least partially coincides with the receiving opening, and wherein the wheel support surface extends beyond a part of the bicycle stand located behind the receiving opening.

6. A bicycle stand (1; 101; 201; 301) according to one or more of the foregoing claims, **characterized in that** the bicycle stand is provided with a substantially elongate profile (8; 108; 208; 308) having in cross-section two legs placed substantially at an angle relative to each other, wherein at least parts of mutually facing sides of the legs form the wheel support surface.

7. A bicycle stand (1; 101; 201; 301) according to claim 6, **characterized in that** the profile has a substantially U-shaped, V-shaped or L-shaped cross-section.

8. A bicycle stand (1; 101; 201; 301) according to claim 6 or 7, **characterized in that** the angle formed between the two legs lies between 70 and 110 degrees, preferably between 80 and 100 degrees.

9. A bicycle stand (1; 101; 201; 301) according to one or more of the foregoing claims, **characterized in that** the support elements are placed at an angle of 20 to 80 degrees, preferably 35 to 60 degrees, to form a converging receiving opening with a corresponding apex angle.

10. A bicycle stand (1; 101; 201; 301) according to one or more of the foregoing claims, **characterized in that** the lateral distance between the support elements is at least 15 cm, and preferably at least 20 cm, close to a part of the receiving space located at the front side of the bicycle stand, and/or wherein the distance between the support elements lies between 7 and 10 cm close to a part of the receiving space located at the rear side of the bicycle stand.

11. A bicycle parking facility comprising one or more bicycle stands (1; 101; 201; 301) according to one or more of the foregoing claims placed adjacently of each other.

## Patentansprüche

1. Fahrradständer (1; 101; 201; 301) für ein Fahrrad, wobei der Fahrradständer von einer Vorderseite davon mit einem Fahrrad für den Zweck zugänglich ist, das Fahrrad in eine geparkte Position zu platzieren, wobei der Fahrradständer Folgendes umfasst:
• eine Radstützfläche (103) für die tragende Stützung eines Vorderrades des Fahrrads in geparkter Position;
• zwei Stützelemente (5a; 5b; 105a; 105b; 205b; 305a; 305b), die zum Stützen einer Vorderradgabel (234) des Fahrrads in der geparkten Position in Bezug auf die Radstützfläche höher angeordnet sind, wobei sich jedes der Stützelemente zwischen einer Vorderseite des Fahrradständers und einer Rückseite des Fahrradständers erstreckt, wobei die Stützelemente in einem Winkel relativ zueinander angeordnet sind, so dass, von oben gesehen, eine im Wesentlichen konvergierende Aufnahmeöffnung (20; 120; 320) für die Vorderradgabel des Fahrrads, die zwischen der Vorderseite und der Rückseite verläuft, zwischen den Stützelementen gebildet wird;
**dadurch gekennzeichnet, dass** sich die Radstützfläche für die tragende Stützung des Vorderrads zwischen der Vorderseite und der Rückseite des Fahrradständers im Wesentlichen kontinuierlich abwärts geneigt erstreckt, wobei sich die Radstützfläche über eine Länge von 20 cm bis 40 cm in einer kontinuierlichen Abwärtsneigung erstreckt, und wobei die Länge, über welche sich die kontinuierliche Abwärtsneigung erstreckt, zwischen 20 cm und 40 cm liegt.

2. Fahrradständer (1; 101; 201; 301) nach Anspruch 1, **dadurch gekennzeichnet, dass** die Radstützfläche einen Neigungswinkel zur Horizontalen aufweist, der zwischen 5 Grad und 25 Grad, bevorzugt zwischen 13 und 18 Grad liegt.

3. Fahrradständer (1; 101; 201; 301) nach Anspruch 1 oder 2, **dadurch gekennzeichnet, dass** sich die Radstützfläche über eine Länge von etwa 30 cm in einer kontinuierlichen Abwärtsneigung erstreckt.

4. Fahrradständer (1; 101; 201; 301) nach einem oder mehreren der vorangegangenen Ansprüche, **dadurch gekennzeichnet, dass** sich die Radstützfläche mit einem im Wesentlichen kontinuierlichen Neigungswinkel abwärts erstreckt.

5. Fahrradständer (1; 101; 201; 301) nach einem oder mehreren der vorangegangenen Ansprüche, **dadurch gekennzeichnet, dass** die Radstützfläche, von oben gesehen, mindestens teilweise mit der Aufnahmeöffnung übereinstimmt, und wobei sich die Radstützfläche über einen Teil des Fahrradständers hinaus erstreckt, der sich hinter der Aufnahmeöffnung befindet.

6. Fahrradständer (1; 101; 201; 301) nach einem oder mehreren der vorangegangenen Ansprüche, **dadurch gekennzeichnet, dass** der Fahrradständer mit einem im Wesentlichen länglichen Profil (8; 108; 208; 308) versehen ist, das in seinem Querschnitt zwei Beine aufweist, die im Wesentlichen in einem Winkel relativ zueinander angeordnet sind, wobei mindestens Teile der einander zugewandten Seiten der Beine die Radstützfläche bilden.

7. Fahrradständer (1; 101; 201; 301) nach Anspruch 6, **dadurch gekennzeichnet, dass** das Profil einen im Wesentlichen U-förmigen, V-förmigen oder L-förmigen Querschnitt aufweist.

8. Fahrradständer (1; 101; 201; 301) nach Anspruch 6 oder 7, **dadurch gekennzeichnet, dass** der Winkel, der zwischen den beiden Beinen gebildet wird, zwischen 70 und 110 Grad, bevorzugt zwischen 80 und 100 Grad liegt.

9. Fahrradständer (1; 101; 201; 301) nach einem oder mehreren der vorangegangenen Ansprüche, **dadurch gekennzeichnet, dass** die Stützelemente in einem Winkel von 20 bis 80 Grad, bevorzugt von 35 bis 60 Grad angeordnet sind, um eine konvergierende Aufnahmeöffnung mit einem entsprechenden Öffnungswinkel zu bilden.

10. Fahrradständer (1; 101; 201; 301) nach einem oder mehreren der vorangegangenen Ansprüche, **dadurch gekennzeichnet, dass** der seitliche Abstand zwischen den Stützelementen in der Nähe eines Teils des Aufnahmeraumes, der sich auf der Vorderseite des Fahrradständers befindet, mindestens 15 cm, bevorzugt mindestens 20 cm beträgt, und/oder wobei der Abstand zwischen den Stützelementen in der Nähe eines Teils des Aufnahmeraums, der sich auf der Rückseite des Fahrradständers befindet, zwischen 7 und 10 cm liegt.

11. Fahrradparkanlage, einen oder mehrere Fahrradständer (1; 101; 201; 301) nach einem oder mehreren der vorangegangenen Ansprüche umfassend, die nebeneinander angeordnet sind.

## Revendications

1. Support à vélos (1 ; 101 ; 201 ; 301) pour un vélo, dans lequel le support à vélos est accessible depuis son côté avant par un vélo afin de placer le vélo en position de stationnement, le support à vélos comprenant :
• une surface porte-roue (103) pour porter la charge d'une roue avant du vélo dans la position de stationnement du vélo ;
• deux éléments porteurs (5a, 5b ; 105a, 105b ; 205b ; 305a, 305b) placés plus haut que la surface porte-roue pour porter une fourche avant (234) du vélo dans la position de stationnement, où chacun des éléments porteurs s'étend entre un côté avant du support à vélos et un côté arrière du support à vélos, où les éléments porteurs sont placés selon un angle les uns par rapport aux autres de sorte que, tels que vus de dessus, une ouverture de réception sensiblement convergente (20 ; 120 ; 320) pour la fourche avant du vélo s'étendant entre le côté avant et le côté arrière soit formée entre les éléments porteurs ;
**caractérisé en ce que** la surface porte-roue pour porter la charge de la roue avant s'étend en pente de manière sensiblement continue vers le bas entre le côté avant et le côté arrière du support à vélos, où la surface porte-roue s'étend selon une pente descendante continue sur une longueur comprise entre 20 cm et 40 cm, la longueur sur laquelle s'étend la pente descendante continue est comprise entre 20 et 40 cm.

2. Support à vélos (1 ; 101 ; 201 ; 301) selon la revendication 1, **caractérisé en ce que** la surface porte-roue a un angle d'inclinaison par rapport à l'horizontale compris entre 5 degrés et 25 degrés, de préférence entre 13 et 18 degrés.

3. Support à vélos (1 ; 101 ; 201 ; 301) selon la revendication 1 ou 2, **caractérisé en ce que** la surface porte-roue s'étend selon une pente descendante continue sur une longueur d'environ 30 cm.

4. Support à vélos (1 ; 101 ; 201 ; 301) selon une ou plusieurs des revendications précédentes, **caractérisé en ce que** la surface porte-roue s'étend vers le bas selon un angle d'inclinaison sensiblement continu.

5. Support à vélos (1 ; 101 ; 201 ; 301) selon une ou plusieurs des revendications précédentes, **caractérisé en ce que** la surface porte-roue, telle que vue de dessus, coïncide au moins partiellement avec l'ouverture de réception, et où la surface porte-roue s'étend au-delà d'une partie du support à vélos située derrière l'ouverture de réception.

6. Support à vélos (1 ; 101 ; 201 ; 301) selon une ou plusieurs des revendications précédentes, **caractérisé en ce que** le support à vélos est muni d'un profil sensiblement allongé (8 ; 108 ; 208 ; 308) ayant en coupe transversale deux jambes placées sensiblement selon un angle l'une par rapport à l'autre, où au moins des parties de côtés mutuellement opposés des jambes forment la surface porte-roue.

7. Support à vélos (1 ; 101 ; 201 ; 301) selon la revendication 6, **caractérisé en ce que** le profile a une coupe transversale sensiblement en forme de U, de V ou de L.

8. Support à vélos (1 ; 101 ; 201 ; 301) selon la revendication 6 ou 7, **caractérisé en ce que** l'angle formé entre les deux jambes est compris entre 70 et 110 degrés, de préférence entre 80 et 100 degrés.

9. Support à vélos (1 ; 101 ; 201 ; 301) selon une ou plusieurs des revendications précédentes, **caractérisé en ce que** les éléments porteurs sont placés selon un angle compris entre 20 et 80 degrés, de préférence entre 35 et 60 degrés, pour former une ouverture de réception convergente selon un angle au sommet correspondant.

10. Support à vélos (1 ; 101 ; 201 ; 301) selon une ou plusieurs des revendications précédentes, **caractérisé en ce que** la distance latérale entre les éléments porteurs est d'au moins 15 cm, et de préférence d'au moins 20 cm, à proximité d'une partie de l'espace de réception situé au côté avant du support à vélos et/ou où la distance entre les éléments porteurs est comprise entre 7 et 10 cm à proximité d'une partie de l'espace de réception situé au côté arrière du support à vélos.

11. Installation de parc de stationnement pour vélos comprenant un ou plusieurs support(s) à vélos (1 ; 101 ; 201 ; 301) selon une ou plusieurs des revendications précédentes, placé(s) de manière adjacente l'un de l'autre.
